(19) Europäisches Patentamt
European Patent Office
Office européen des brevets

(11) **EP 1 483 547 B1**

(12) **EUROPEAN PATENT SPECIFICATION**

(45) Date of publication and mention
of the grant of the patent:
**09.01.2008 Bulletin 2008/02**

(51) Int Cl.:
*G01B 9/02* (2006.01)  *G01D 5/353* (2006.01)
*G01N 21/77* (2006.01)  *G01N 21/45* (2006.01)

(21) Application number: **03712338.7**

(22) Date of filing: **13.03.2003**

(86) International application number:
**PCT/GB2003/001059**

(87) International publication number:
**WO 2003/078923 (25.09.2003 Gazette 2003/39)**

(54) **OPTICAL INTERFEROMETER**

OPTISCHES INTERFEROMETER

INTERFEROMETRE OPTIQUE

(84) Designated Contracting States:
**AT BE BG CH CY CZ DE DK EE ES FI FR GB GR HU IE IT LI LU MC NL PT RO SE SI SK TR**

(30) Priority: **14.03.2002  GB 0206008**

(43) Date of publication of application:
**08.12.2004   Bulletin 2004/50**

(73) Proprietor: **Farfield Group Limited Crewe Cheshire CW1 6GU (GB)**

(72) Inventors:
• **FREEMAN, Neville J. Utkinton, Tarporley CW6 0XA (GB)**
• **CROSS, Graham Stockton-on-Tees TS21 1HN (GB)**
• **RONAN, Gerard A., Farfield Sensors Ltd., Unit 51 Salford M6 6AJ (GB)**

• **SWANN, Marcus, Dept. of Physics Univ. of Durham Durham DH1 3LE (GB)**

(74) Representative: **Stuttard, Garry Philip Urquhart-Dykes & Lord LLP Tower North Central Merrion Way Leeds LS2 8PA (GB)**

(56) References cited:
DE-A- 3 528 259        DE-A- 19 840 523
US-A- 5 521 704        US-B1- 6 335 793

• TH. SCHUBERT, N. HAASE ET.AL.: "Refractive-index measurements using an integrated Mach-Zehnder interferometer" SENSORS AND ACTORS A, 1997, pages 108-112, XP002243762
• P. HUA, B.J. LUFF ET.AL.: "Integrated optical dual Mach-Zehnder interferometer sensor" SENSORS AND ACTORS B, 2002, pages 250-257, XP002243763

## Description

The present invention relates to an integrated optical waveguide interferometer including a sensing waveguide with a path of interaction (with the localised environment) of variable optical length, and to a process for determining the absolute status thereof after the introduction into the localised environment of (or changes in) a stimulus of interest and to a method for determining the absolute calibration status thereof before the introduction into the localised environment of (or changes in) a stimulus of interest.

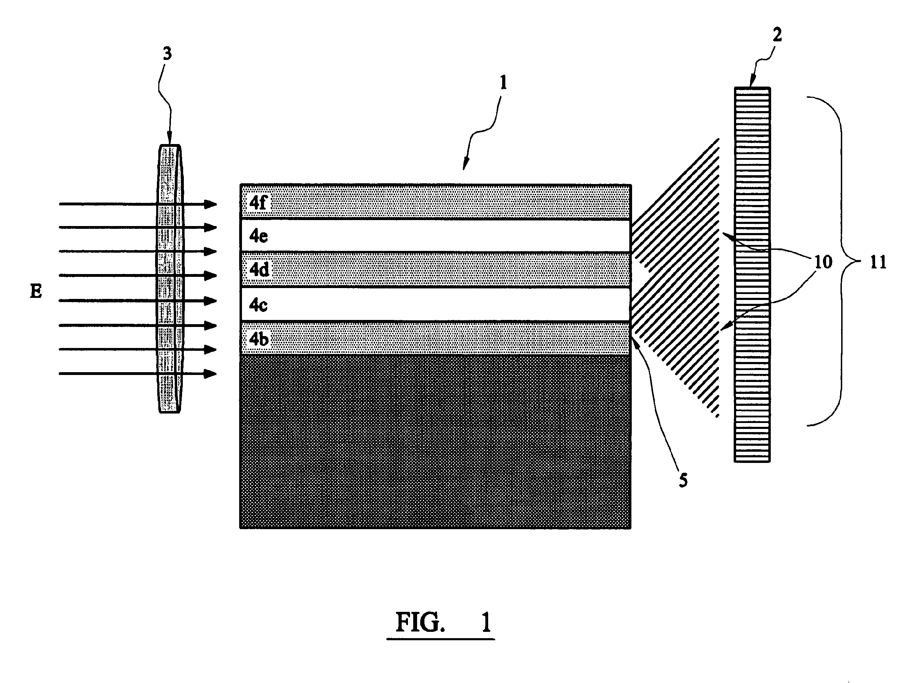

Optical interferometry is a well-established technique in the field of sensing. It is intrinsic to optical interferometers that the response is cyclical and provides identical information every integer multiple of $2\pi$ radians in phase difference. In order to track differences in optical path length over ranges greater than $2\pi$ radians, a fringe counting method is generally required. However in the case of integrated optical interferometers, a large stimulus applied rapidly to the sensing waveguide may cause the loss of information through miscounting. This phenomenon is known as aliasing and is described hereinafter in detail with reference to Figure 1.

In order to address aliasing, it is known to exploit two or more wavelengths to provide a difference signal that acts as a slowly varying phase position marker. In the case of optical interferometers for chemical and biological sensing, refractive index dispersion in the chemical or biological materials may complicate such an analysis.

It will be appreciated that over its lifetime, an optical interferometer will be exposed continuously to a changing localised environment and its absolute status will vary accordingly. For example, the level of moisture absorbed into the sensing waveguide will vary according to atmospheric conditions. In practice, this means that the optical interferometer will need to be calibrated on each occasion before it is used (typically with a calibrant gas). This allows measured changes in effective refractive index to be related exclusively to the introduction of or changes in a stimulus of interest. The need to calibrate the instrument prior to each use is a great inconvenience to the user and the use of standard material calibrants is restrictive.

If the history of the phase differences are not known or are lost during an interruption in monitoring the optical interferometer, the user cannot determine its absolute status in response to an analyte. Starting or resuming operation may lead to significant errors since signal loss (aliasing) may have occurred. Typically this means that once an optical interferometer is calibrated, it is not possible to switch it off without the calibration being lost.

WO-A-01/36947 (Farfield Sensors Limited) discloses the use of thermal or wavelength biassing to make absolute measurements of an optical interferometer and to address aliasing. This requires rather sophisticated ancillary components to be incorporated into the sensor assembly.

The present invention seeks to greatly reduce the risk of aliasing and eliminate the need for standard calibration prior to use by exploiting an optical interferometer having a sensing waveguide with a built-in reference system. More particularly, the present invention relates to an integrated optical waveguide interferometer having on its sensing waveguide a well characterised, variable optical length path of interaction.

Thus viewed from one aspect the present invention provides an integrated optical waveguide interferometer capable of detecting the amount of (eg concentration of) or changes in a stimulus of interest comprising:

   a sensing waveguide capable of exhibiting a measurable response to a change in a localised environment caused by the introduction of or changes in the stimulus of interest, said sensing waveguide having a path of interaction of variable optical length.

The integrated optical waveguide interferometer of the invention allows the user to determine its absolute status (regardless of the arbitrary phase position) before or after the introduction of a stimulus of interest. It is also a straightforward matter to verify that the integrated optical waveguide interferometer of the invention remains in its previously determined state after suspension of operation (eg a power failure) has prevented continuous monitoring of the phase shift. This substantially eliminates the risk of the output of the integrated optical waveguide interferometer being subjected to aliasing.

The integrated optical waveguide interferometer may be generally of the type disclosed in WO-A-98/22807, which is used for the two-part form delimitation, or WO-A-01/36945.

In a preferred embodiment, the integrated optical waveguide interferometer further includes:

   one or more sensing layers capable of inducing in the sensing waveguide a measurable response to a change in the localised environment caused by the introduction of or changes in a stimulus of interest.

In this embodiment, the integrated optical waveguide interferometer is advantageously adapted to optimise the evanescent component so as to induce in the sensing waveguide a measurable response. The integrated optical waveguide interferometer may comprise a plurality of separate sensing layers to enable changes at different localised environments to be detected.

The (or each) sensing layer may be or include the stimulus of interest.

In a preferred integrated optical waveguide interferometer of the invention, the sensing layer comprises an absorbent material (eg a polymeric material such as polymethylmethacrylate, polysiloxane, poly-4-vinylpyridine) or a bioactive material (eg containing antibodies, enzymes, DNA fragments, functional proteins or whole cells). The absorbent material may be capable of absorbing a gas, a liquid or a vapour analyte containing a chemical stimulus of interest. The bioactive material may be appropriate for liquid or gas phase biosensing. For example, the sensing layer may comprise a porous silicon material optionally biofunctionalised with antibodies, enzymes, DNA fragments, functional proteins or whole cells. In an integrated optical waveguide interferometer for use in biological or chemical sensing, the interaction of the stimulus of interest with the sensing layer may be a binding interaction or absorbance or any other interaction.

To optimise its performance, the integrated optical waveguide interferometer may further comprise an inactive waveguide in which the sensing layer is substantially incapable of inducing a measurable response to a change in the localised environment caused by the introduction of or changes in the stimulus of interest. The inactive waveguide is capable of acting as a reference layer. It is preferred that the sensing waveguide and inactive waveguide have identical properties with the exception of the measurable response to the change in the localised environment caused by the introduction of or changes in the stimulus of interest.

In a preferred integrated optical waveguide interferometer of the invention, the sensing waveguide (and/or inactive waveguide) comprises silicon nitride or (preferably) silicon oxynitride.

Preferably the sensing waveguide and any additional waveguide (such as a reference waveguide) is a planar waveguide (*ie a waveguide which permits light propagation in any arbitrary direction within the plane*), particularly preferably a slab waveguide.

In a preferred embodiment, the variation in optical length of the path of interaction is sufficient to ensure a variation in phase change caused by the introduction of or changes in a stimulus of interest of <2n.

By way of example, the path of interaction may be stepped. Preferably the path of interaction is of dual optical length. Particularly preferably the difference in dual optical length is sufficient to ensure a difference in phase change caused by the introduction of or changes in a stimulus of interest of <2n.

The optical length of the path of interaction (L') is related to the geometrical length of the path of interaction (L) by the relationship:

$$L' = \lambda L/n$$

(where $\lambda$ is the free space wavelength of electromagnetic radiation and n is the refractive index of the path of interaction).

Thus the variable optical length of the path of interaction may be provided by a variation in its geometrical length. Preferably the variation in geometrical length is sufficient to ensure a variation in phase change caused by the introduction of or changes in a stimulus of interest of <2n.

For example, the geometrical length of the path of interaction may be stepped. Preferably the path of interaction is of dual geometrical length. Particularly preferably the difference in dual geometrical length is sufficient to ensure a difference in phase change caused by the introduction of or changes in a stimulus of interest of <2n.

The variation in the geometrical length of the path of interaction may be continuous. For example, the path of interaction may have a gradient.

The variable optical length of the path of interaction may be provided by a variation in its refractive index. The refractive index may be varied intrinsically or dimensionally.

The refractive index may be varied intrinsically by varying the composition of the material of the sensing waveguide. For example, the sensing waveguide may be composed of two or more discrete portions of material of differing (and well characterised) composition. Preferably the sensing waveguide is of dual composition.

Preferably the refractive index is varied dimensionally (which can be advantageously achieved very accurately through know fabrication techniques). For example, the refractive index may be varied dimensionally by varying the thickness of the sensing waveguide. Preferably the sensing waveguide is of dual thickness.

In a preferred embodiment, the integrated optical waveguide interferometer further comprises a capping layer adapted to define the path of interaction of variable optical length. The capping layer is typically in contact with the surface of the sensing waveguide.

The capping layer may incorporate a window which bounds the localised environment (eg above the part of the sensing waveguide with which the capping layer is in contact). For example, the window may bound a sensing layer such as an absorbent material or a bioactive material (described in greater detail above). The shape of the window may be tailored to precisely define the variation in the optical length of the path of interaction.

By incorporating a window, the capping layer defines a path of interaction of (at least) dual optical length in which a first part of the modal field interacts with the medium in the window and a second part of the modal field interacts with the medium of the capping layer.

The composition (and therefore the refractive index) of a capping layer may be precisely determined using standard material deposition methods familiar in semiconductor processing (for example, silicon dioxide deposition using PECVD). Photolithography may be used in defining the window and typically has a resolution of less than 1 micron. The variation in path length can thus be controlled to this level.

Suitable capping layers are described in copending UK patent application no. 0203581.4 filed on 15th February 2002 by Farfield Sensors Limited. The capping layer typically has a thickness of 10 microns or less, preferably 5 microns or less and may be composed of silicon dioxide.

Preferably the integrated optical waveguide interferometer constitutes a multi-layered structure (eg a laminated waveguide structure). In a preferred embodiment, each of the plurality of layers in the multi-layered structure are built onto a substrate (eg of silicon) through known processes such as PECVD, LPCVD, etc. Such processes are highly repeatable and lead to accurate manufacture. Intermediate transparent layers may be added (eg silicon dioxide) if desired. Typically the multilayered structure is of thickness in the range 0.2-10 microns. A layered structure advantageously permits layers to be in close proximity (eg a sensing waveguide and an inactive (reference) waveguide may be in close proximity to one another so as to minimise the deleterious effects of temperature and other environmental factors). Preferably the integrated optical waveguide interferometer comprises a stack of transparent dielectric layers wherein layers are placed in close proximity. Preferably each layer is fabricated to allow equal amounts of electromagnetic radiation to propagate by simultaneous excitation of the guided modes in the structure. Particularly preferably, the amount of electromagnetic radiation in the sensing waveguide/inactive waveguide is equal.

Electromagnetic radiation generated from a conventional source may be propagated into the integrated optical waveguide interferometer in a number of ways. In a preferred embodiment, radiation is simply input via an end face of the integrated optical waveguide interferometer (this is sometimes described as "an end firing procedure"). Preferably the electromagnetic radiation source provides incident electromagnetic radiation having a wavelength falling within the optical range. Propagating means may be employed for substantially simultaneously propagating incident electromagnetic radiation into a plurality of waveguides.

For example, one or more coupling gratings or mirrors may be used. A tapered end coupler rather than a coupling grating or mirror may be used to propagate light into the lowermost waveguide.

The incident electromagnetic radiation may be oriented (eg plane polarised) as desired using an appropriate polarising means. The incident electromagnetic radiation may be focussed if desired using a lens or similar micro-focussing means.

The integrated optical waveguide interferometer may further comprise: means for intimately exposing at least a part of the sensing waveguide (or at least a part of the (or each) sensing layer) to the localised environment (eg as described in WO-A-01/36945). For example, the means for intimately exposing at least a part of the sensing waveguide (or at least a part of the (or each) sensing layer) to the localised environment may be a part of a microstructure positionable on the surface of and in intimate contact with the sensing waveguide. The microstructure may comprise means for intimately exposing at least a part of the sensing waveguide (or at least a part of the (or each) sensing layer) to the localised environment in the form of one or more microchannels and/or microchambers. For example, an analyte containing chemical stimuli may be fed through microchannels or chemical reactions may take place in an analyte located in a microchamber. An analyte containing chemical stimuli may be fed into the microchannels by capillary action or positively fed by an urging means. The means for intimately exposing at least a part of the sensing waveguide (or at least a part of the (or each) sensing layer) to the localised environment may be integrated onto the sensing waveguide or may be included in a cladding layer. For example, microchannels and/or microchambers may be etched into the cladding layer.

The means for intimately exposing at least a part of the sensing waveguide (or at least a part of the (or each) sensing layer) to the localised environment may be adapted to induce chemical or biological changes in a static analyte containing a chemical or biological stimulus of interest. In this sense, the system may be considered to be dynamic. Chemical or biological changes (eg reactions) may be induced in any conventional manner such as by heat or radiation.

As a consequence of the introduction of or changes in a physical, biological and/or chemical stimulus of interest in the localised environment (ie a change in the refractive index of material in the localised environment), changes in the transmission of electromagnetic radiation down the sensing waveguide occur which may be measured (ie a measurable response). Due to the variation in optical length of the path of interaction, the measurable response varies. Thus by comparing the varying measurable response the optical interferometer of the invention makes available a slowly varying phase position marker over many cycles of phase change and by dispensing with the need for standard calibration allows measurements of the absolute status of the integrated optical waveguide interferometer before or after the introduction of a stimulus of interest.

Viewed from a further aspect the present invention provides a process for determining the absolute status of an integrated optical waveguide interferometer, said process comprising:

(A) providing an integrated optical waveguide interferometer as hereinbefore defined;

(B) irradiating the integrated optical waveguide interferometer with electromagnetic radiation;

(C) introducing to the localised environment a stimulus of interest;

(D) measuring the variation in phase shift of the modal field interacting with the path of interaction; and

(E) calculating from the variation in phase shift the absolute status of the integrated optical waveguide interferometer.

Preferably the variation in phase shift caused by the introduction of or changes in a stimulus of interest is <2n.

In a preferred embodiment, the process of the invention comprises:

(A1) providing an integrated optical waveguide interferometer as hereinbefore defined, wherein the path of interaction is of dual optical length;

(B) irradiating the integrated optical waveguide interferometer with electromagnetic radiation;

(C) introducing to the localised environment a stimulus of interest;

(D1) measuring the difference in phase shift of the first and second parts of the modal field interacting with the path of interaction of dual optical length respectively; and

(E1) calculating from the difference in phase shift the absolute status of the integrated optical waveguide interferometer.

Preferably the difference in phase shift caused by the introduction of or changes in a stimulus of interest is <2n.

Preferably the process further comprises:

(F) relating the absolute status to the amount (eg concentration) of or changes in the chemical stimulus of interest. Methods for performing this calculation will be familiar to those skilled in the art.

Viewed from a yet further aspect the present invention provides a method for determining the absolute calibration status of an integrated optical waveguide interferometer, said process comprising:

(A) providing an integrated optical waveguide interferometer as hereinbefore defined;

(B) irradiating the integrated optical waveguide interferometer with electromagnetic radiation;

(C) measuring the variation in phase position of the modal field interacting with the path of interaction; and

(D) calculating from the variation in phase position the absolute calibration status of the integrated optical waveguide interferometer.

In a preferred embodiment, the method according to the invention comprises:

(AI) providing an integrated optical waveguide interferometer as hereinbefore defined, wherein the path of interaction is of dual optical length;

(B) irradiating the integrated optical waveguide interferometer with electromagnetic radiation;

(C1) measuring the difference in phase position of the first and second parts of the modal field interacting with the path of interaction of dual optical length respectively; and

(D1) calculating from the difference in phase position the absolute status of the integrated optical waveguide interferomete

In a preferred embodiment, steps (A) to (C) are performed at start-up (eg automatically).

An interference pattern may be generated when the electromagnetic radiation from the integrated optical waveguide interferometer is coupled into free space and the pattern may be recorded in a conventional manner (see for example WO-A-98/22807). A measurable response of the sensing waveguide to a change in the localised environment manifests itself as movement of the fringes in the interference pattern. The phase shift of the radiation in the sensing waveguide may be straightforwardly calculated from the movement in the fringes.

Movement in the interference fringes may be measured either using a single detector which measures changes in the electromagnetic radiation intensity or a plurality of such detectors which monitor the change occurring in a number of fringes or the entire interference pattern. The one or more detectors may comprise one or more photodetectors. Where more than one photodetector is used this may be arranged in an array.

Preferably the integrated optical waveguide interferometer is adapted to determine its absolute calibration status at start-up. Particularly preferably the integrated optical waveguide interferometer is adapted to determine its absolute calibration status automatically at start-up.

The present invention will now be described in a non-limitative sense with reference to the accompanying Figures in which:

Figure 1 illustrates in side view an integrated optical waveguide interferometer of the prior art;

Figure 2 illustrates in exposed plan view the an embodiment of the integrated optical waveguide interferometer of the invention;

Figure 3 illustrates the interference pattern produced from the left and right hand modal fields of the embodiment of Figure 2;

Figure 4 illustrates the two parallel modal fields $\phi_1$ and $\phi_r$ and their difference in path length of interaction;

Figure 5 illustrates in exposed plan view an embodiment of the integrated optical waveguide interferometer of the invention;

Figure 6 illustrates an embodiment of the integrated optical waveguide interferometer of the invention; and

Figure 7 illustrates an embodiment of the integrated optical waveguide interferometer of the invention.

Figure 1 illustrates in side view an integrated optical waveguide interferometer of the prior art designated generally by reference numeral 1. The integrated optical waveguide interferometer 1 is of the type described in WO-A-98/22807 which in this embodiment comprises a silicon substrate layer 4a, silicon dioxide layers 4b and 4d, silicon oxynitride layers 4c and 4e and an absorbent sensing layer 4f. The silicon oxynitride layer 4c acts as the reference waveguide and the silicon oxynitride layer 4e acts as the sensing waveguide so that the integrated optical waveguide interferometer 1 is deployed in evanescent mode. The assembly further comprises a photodetector 2 for detecting fringes 10 of an interference pattern 11 in the far field, a focussing lens 3 and a source (not shown) of electromagnetic radiation E.

The silicon oxynitride layer 4e (the sensing waveguide) acts through its evanescent field to provide a transduction mechanism for changes in the optogeometrical properties of the absorbent sensing layer 4f. The propagation constant of the sensing waveguide mode ($\beta$) is altered as the optogeometrical properties of the absorbent sensing layer 4f change and when the far field output of the sensing waveguide mode is recombined with that of the reference waveguide 4c, the intensity distribution of the interference pattern 11 shifts.

The observed phase shift ($\Delta\phi$) is related to the shift in relative phase position between the interfering modal fields of the sensing waveguide 4e and reference waveguide 4c at the output face 5. Since the modal field of the reference waveguide 4c is essentially unaffected by changes in the optogeometrical properties of the absorbent sensing layer 4f, the observed phase shift is almost exclusively due to changes in the propagation constant of the sensing waveguide mode. Over a length (L) of a path of interaction (the length over which the evanescent field can act as a transducer) the observed phase shift is given by:

$$\Delta\phi \;=\; \Delta\beta L$$

(where $\Delta\beta$ is the change in the propagation constant $\beta$ per unit length of interaction). The interference pattern 11 produced in the far field is reproduced identically when:

$$\Delta\phi \;=\; n2\pi$$

(where $n$ is an integer).

Thus if a method of 'fringe counting' (ie the counting of $n$) is not employed or the method cannot record rapid and large changes in phase quickly enough, it will be impossible to unambiguously determine the value of $\Delta\phi$.

Absolute Measurements and Prevention of Aliasing

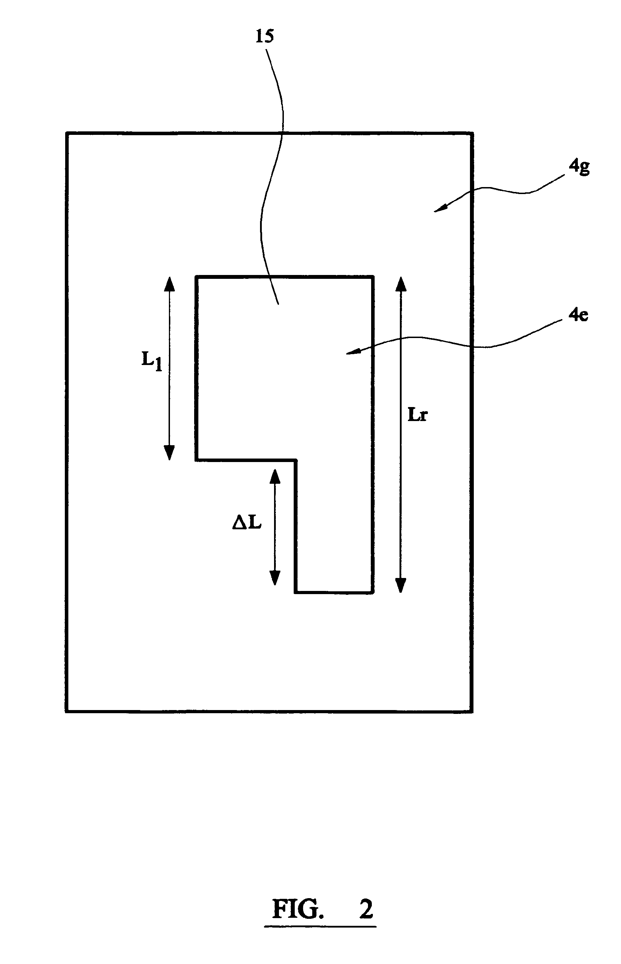

Figure 2 illustrates in exposed plan view an embodiment of the integrated optical waveguide interferometer of the invention. It is largely the same as that described above with reference to Figure 1 but the absorbent sensing layer 4f has been replaced by a capping layer 4g of known refractive index into which a window 15 of precisely defined dimensions has been introduced by selective removal of the layer thereby exposing the surface of the sensing waveguide 4e. The window 15 provides a path of interaction where the evanescent field of the sensing waveguide mode can interact with the medium within the window. The path of interaction is of dual length $L_1$ and $L_2$ differing in path length by $\Delta L$.

The phase changes $\Delta\phi_1$ and $\Delta\phi_r$ experienced by the left and right parts of the modal field carried in the path of interaction of dual length $L_1$ and $L_r$ are different since the path length differs. The difference $\Delta$ between the phase changes is a much slower function of $\Delta\beta$ since it is determined by the difference in path length:

$$\Delta = \Delta\phi_l - \Delta\phi_r = \Delta\beta\Delta L = \Delta\beta\left(L_l - L_r\right)$$

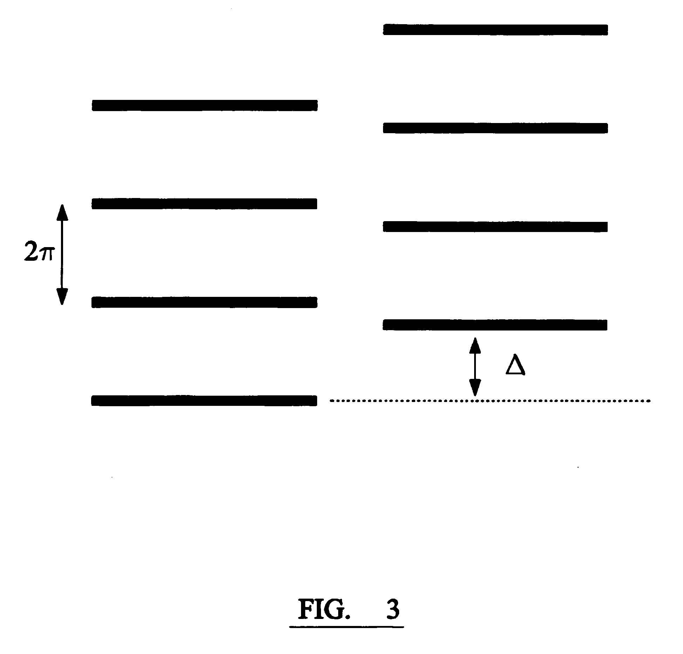

If the condition $\Delta < 2\pi$ is achieved by designing a suitably small difference in path length $\Delta L$, the interference pattern produced from the left and right parts of the modal field will remain within one cycle of repetition (when compared together) through the many cycles of phase change experienced individually by the left and right parts of the modal field (see figure 3).

By way of example, a stimulus of interest typically causes a change in the propagation constant ($\Delta\beta$) of $11.283 \times 10^3 m^{-1}$ (such a change occurs when water is introduced to replace air as the medium above the surface of the sensing waveguide). The maximum difference in path length required is then given by $\Delta L = 2\pi/\Delta\beta = 0.557$ mm.

Aliasing is prevented since the relative phase positions of the parallel parts of the modal field carried in the path of interaction of dual length can be determined before and after the stimulus of interest is introduced. There is no need to monitor continuously the phase position of each individual component during the application of the stimulus of interest. Obtaining $\Delta$ in this way and knowing $\Delta L$ leads directly to the desired $\Delta\beta$.

Calibration

In place of the absorbent sensing layer 4f in Figure 1, it is possible to incorporate a capping layer (or spacer) in which a window of precisely defined dimensions serves to expose the silicon oxynitride layer 4e (the sensing waveguide) to a stimulus of interest. For example, a capping layer 4g may be used to define a dual path of interaction as described above with reference to Figure 2. The composition and therefore the refractive index of the capping layer 4g may be precisely determined using standard material deposition methods familiar in semiconductor processing (eg silicon dioxide deposition using PECVD). Photolithography used to define the window typically has a resolution of less than 1 micron.

Calibration requires the absolute value of the propagation constant of the modal field of the sensing waveguide to be determined prior to the introduction of a stimulus of interest. Provided that the refractive index of the capping layer is known, it is possible to perform calibration as follows.

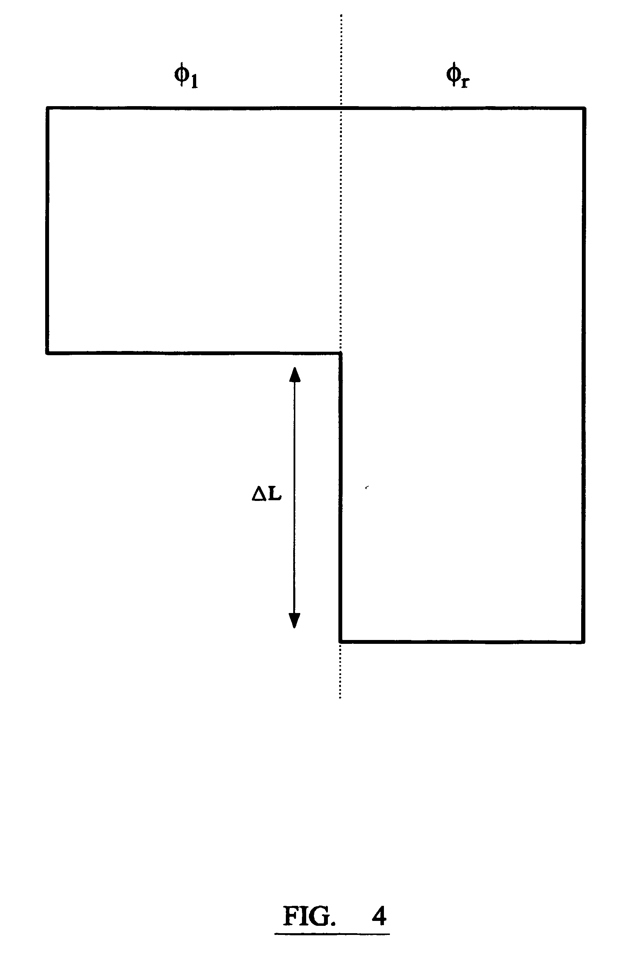

With reference to figure 4, the measured difference $\Delta$ in output phase position of the two parallel parts of the modal field $\phi_l$ and $\phi_r$ carried in the path of interaction of dual length is formulated as follows:

$$\Delta \; = \; (\beta_c - \beta_s)\,\Delta L \; = \; \Delta\beta\Delta L \qquad\qquad (1)$$

(where $\beta_c$ is the propagation constant of the part of the modal field of the sensing waveguide beneath the capping layer and $\beta_s$ is the propagation constant of the part of the modal field of the sensing waveguide in the window.

Provided that the capping layer is sufficiently thick, the difference in the propagation constants ($\Delta\beta$) depends only on the difference in refractive index between the medium in the window and the capping layer. The former may be air for example (whose refractive index is known to be approximately unity).

Using two orthogonal polarisations (TE and TM), two different values for $\Delta$ may be measured ($\Delta_{TE}$ and $\Delta_{TM}$). Equation 1 may be solved numerically for values of the refractive index and the thickness of the sensing waveguide that provide $\Delta\beta_{TE}$ and $\Delta\beta_{TM}$ corresponding to $\Delta_{TE}$ and $\Delta_{TM}$. Plots of $\Delta\beta_{TE}$ and $\Delta\beta_{TM}$ versus thickness and refractive index cross each other and have a common value at a unique pair of parameters (thickness and refractive index) for the sensing waveguide. The absolute values for the propagation constants can be obtained by methods known to those skilled in the art.

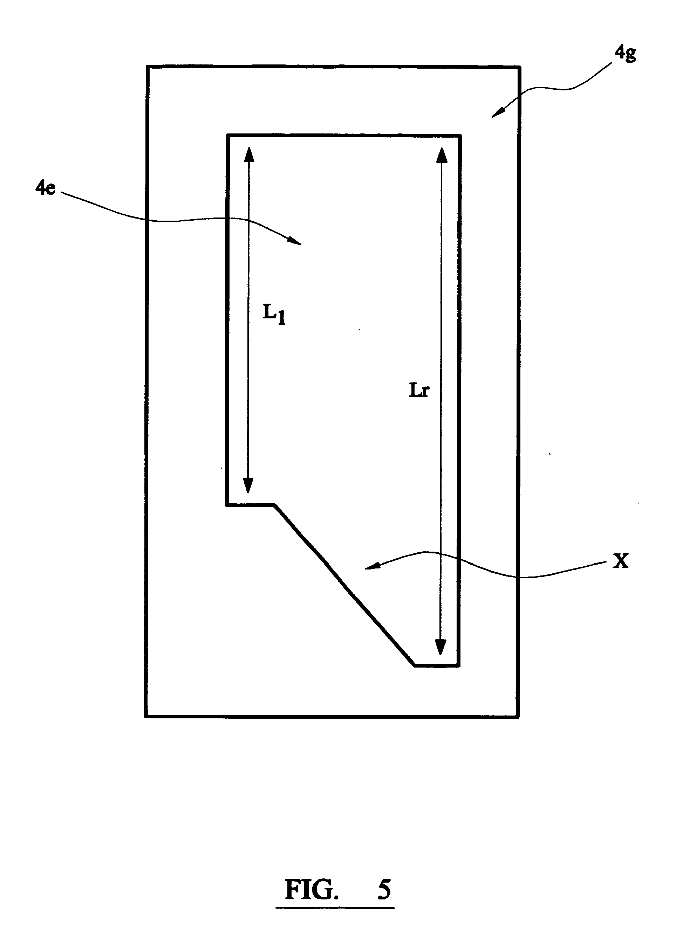

Figure 5 illustrates in exposed plan view an embodiment of the integrated optical waveguide interferometer of the invention. It is largely the same as that described above with reference to Figure 1 but the absorbent sensing layer 4f has been replaced with a capping layer to expose the surface of the silicon oxynitride layer 4e acting as the sensing waveguide. The sensing waveguide mode is carried within a path of interaction of variable optical length provided by a gradient X. This permits fine details of the stepwise change in phase between the paths $L_l$ and $L_r$ to be measured.

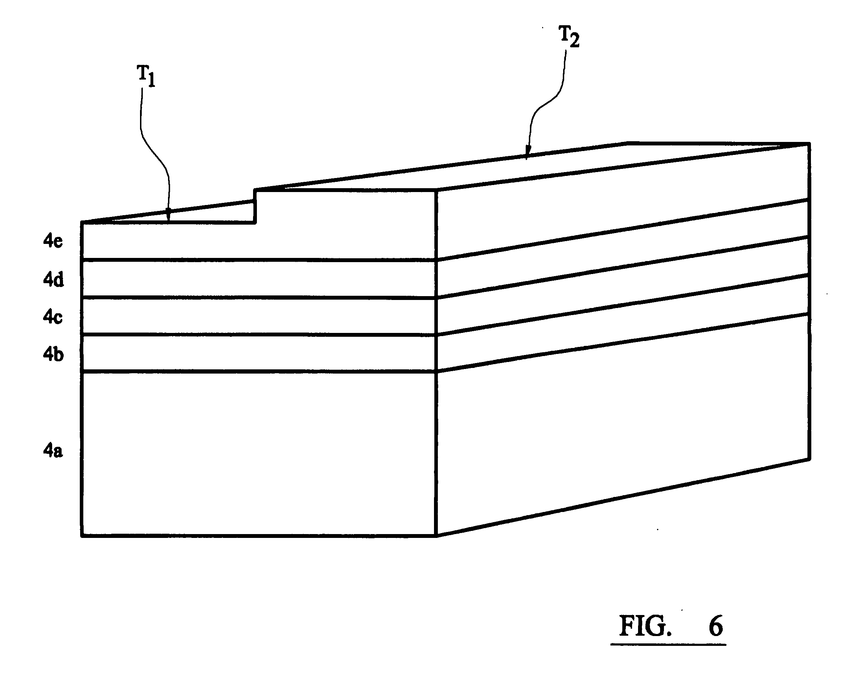

Figure 6 illustrates an embodiment of an integrated optical waveguide interferometer of the invention. It is largely the same as that described above with reference to Figure 1 but without the absorbent sensing layer 4f. The silicon oxynitride layer 4e (the sensing waveguide) is of dual thickness $T_1$ and $T_2$ to give a path of interaction of dual optical length as described below.

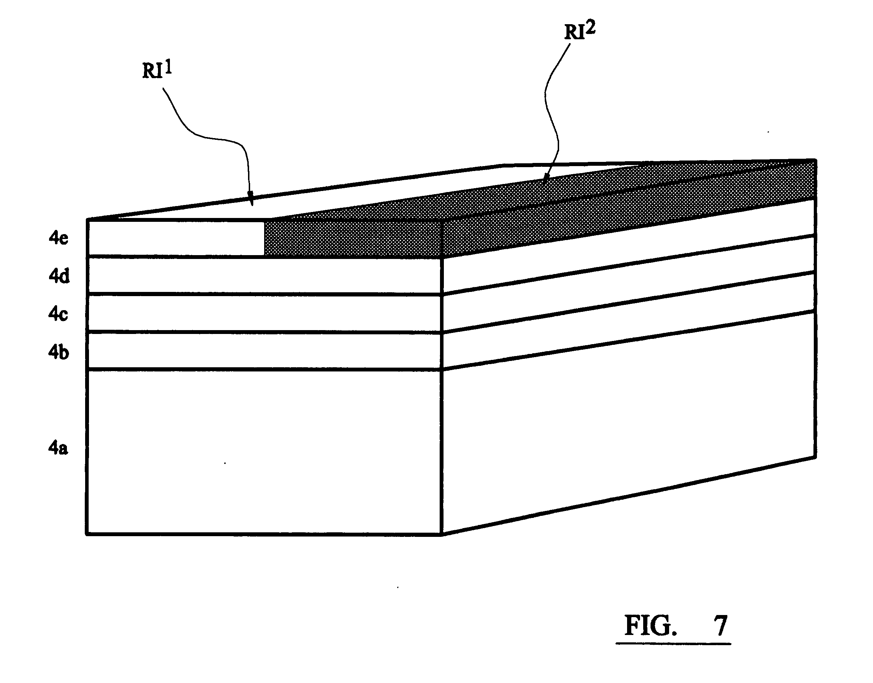

Figure 7 illustrates an embodiment of an integrated optical waveguide interferometer of the invention. It is largely the same as that described above with reference to Figure 1 but without the absorbent sensing layer 4f. The silicon oxynitride layer 4e (the sensing waveguide) is of dual composition (*ie* dual intrinsic refractive index RI[1] and RI[2]) to give a path of interaction of dual optical length as described below.

With reference to Figures 6 and 7, the optical path length (L') is related to the geometrical path length (L) by

$$L' = \lambda L/n$$

(where $\lambda$ is the wavelength of the excitation radiation and n is the refractive index of the path of interaction).

Any variation in L' can be used to determine the absolute phase condition. Variations in L have been described with reference to Figures 2 and 5. A sensing waveguide with known variation in refractive index (either dimensional - see figure 6 or intrinsic - see figure 7) may be used analogously.

**Claims**

1. An integrated optical waveguide interferometer (1) capable of detecting the amount of or changes in a stimulus of interest comprising:

    a sensing waveguide (4e) capable of exhibiting a measurable response to a change in a localised environment caused by the introduction of or changes in the stimulus of interest, said sensing waveguide having a variation in optical length of a path of interaction, **characterised in that** said variation in optical path length of the path of interaction is provided by a variation in its geometrical length or by a variation in its refractive index and said variation being sufficient to ensure a variation in phase change caused,by the introduction of or changes in the stimulus of interest, of <2n.

2. An integrated optical waveguide interferometer (1) as claimed in claim 1 further including:

    one or more sensing layers (4f) capable of inducing in the sensing waveguide (4e) a measurable response to a change in the localised environment caused by the introduction of or changes in the stimulus of interest.

3. An integrated optical waveguide interferometer (1) as claimed in claim 2 further comprising:

    an inactive waveguide (4c) in which the sensing layer (4f) is substantially incapable of inducing a measurable response to a change in the localised environment caused by the introduction of or changes in the stimulus of interest.

4. An integrated optical waveguide interferometer (1) as claimed in any preceding claim wherein the path of interaction is stepped.

5. An integrated optical waveguide interferometer (1) as claimed in any preceding claim wherein the path of interaction is of dual optical path length.

6. An integrated optical waveguide interferometer (1) as claimed in claim 5 wherein the difference in dual optical path length is sufficient to ensure a difference in phase change caused by the introduction of or changes in the stimulus of interest of <2n.

7. An integrated optical waveguide interferometer (1) as claimed in any preceding claim wherein the variation in optical path length of the path of interaction is provided by a variation in its geometrical length.

8. An integrated optical waveguide interferometer (1) as claimed in claim 1 or 7 wherein the geometrical length of the path of interaction is stepped.

9. An integrated optical waveguide interferometer (1) as claimed in claim 1, 7 or 8 wherein the path of interaction is of dual geometrical length.

10. An integrated optical waveguide interferometer (1) as claimed in claim 9 wherein the difference in dual geometrical length is sufficient to ensure a difference in phase change caused by the introduction of or changes in the stimulus of interest of <2n.

11. An integrated optical waveguide interferometer (1) as claimed in claim 1 or 7 wherein the variation in the geometrical length of the path of interaction is continuous.

12. An integrated optical waveguide interferometer (1) as claimed in claim 11 wherein the path of interaction has a gradient.

13. An integrated optical waveguide interferometer (1) as claimed in any of claims 1 to 6 wherein the variation in optical path length of the path of interaction is provided by a variation in its refractive index.

14. An integrated optical waveguide interferometer (1) as claimed in claim 13 wherein the refractive index is varied intrinsically by varying the composition of the material of the sensing waveguide (4e).

15. An integrated optical waveguide interferometer (1) as claimed in claim 14 wherein the sensing waveguide (4e) is composed of two or more discrete portions of material of differing composition.

16. An integrated optical waveguide interferometer (1) as claimed in claim 14 or 15 wherein the sensing waveguide (4e) is of dual composition.

17. An integrated optical waveguide interferometer (1) as claimed in claim 13 wherein the refractive index is varied dimensionally.

18. An integrated optical waveguide interferometer (1) as claimed in claim 17 wherein the refractive index is varied dimensionally by varying the thickness of the sensing waveguide (4e).

19. An integrated optical waveguide interferometer (1) as claimed in claim 17 or 18 wherein the sensing waveguide (4e) is of dual thickness.

20. An integrated optical waveguide interferometer (1) as claimed in any preceding claim further comprising a capping layer adapted to define the variation in optical path length of the path of interaction.

21. An integrated optical waveguide interferometer (1) as claimed in claim 20 wherein the capping layer incorporates a window (15) which bounds the localised environment.

22. An integrated optical waveguide interferometer (1) as claimed in claim 21 wherein the window (15) bounds a medium so that the capping layer defines a path of interaction of at least dual optical path length in which a first part of a modal field interacts with the medium in the window and a second part of the modal field interacts with the medium of the capping layer.

**Patentansprüche**

1. Integriertes optisches Wellenleiter-Interferometer (1), welches in der Lage ist, den Umfang von oder Veränderungen bei einem interessierenden Stimulus zu erfassen, umfassend:

einen erfassenden Wellenleiter (4e), welcher eine messbare Antwort auf eine Veränderung in einem örtlich begrenzten Umfeld, welche durch die Einführung von oder die Veränderungen bei dem interessierenden Stimulus verursacht wird, zeigen kann, wobei der erfassende Wellenleiter eine Abweichung in einer optischen Länge eines Interaktionspfades aufweist, **dadurch gekennzeichnet, dass** die Abweichung der optischen Pfadlänge des Interaktionspfades durch eine Abweichung in seiner geometrischen Länge oder durch eine Abweichung in seinem Brechungsindex bereitgestellt wird und dass die Abweichung ausreicht, um eine Abweichung bei einer Phasenveränderung von $< 2\pi$ sicherzustellen, welche durch die Einführung von oder die Veränderungen bei dem interessierenden Stimulus verursacht wird.

2. Integriertes optisches Wellenleiter-Interferometer (1) nach Anspruch 1, weiter umfassend:

eine oder mehrere erfassende Schichten (4f), welche in dem erfassenden Wellenleiter (4e) eine messbare Antwort auf eine Veränderung in dem örtlich begrenzten Umfeld induzieren können, welche durch die Einführung von oder die Veränderungen bei dem interessierenden Stimulus verursacht wird.

3. Integriertes optisches Wellenleiter-Interferometer (1) nach Anspruch 2, weiter umfassend:

einen inaktiven Wellenleiter (4c), wobei die erfassende Schicht (4f) im Wesentlichen nicht in der Lage ist, eine messbare Antwort auf eine Veränderung in dem örtlich begrenzten Umfeld zu induzieren, welche durch die Einführung von oder die Veränderungen bei dem interessierenden Stimulus verursacht wird.

4. Integriertes optisches Wellenleiter-Interferometer (1) nach einem der vorhergehenden Ansprüche, wobei der Interaktionspfad gestuft ist.

5. Integriertes optisches Wellenleiter-Interferometer (1) nach einem der vorhergehenden Ansprüche, wobei der Interaktionspfad eine doppelte optische Pfadlänge aufweist.

6. Integriertes optisches Wellenleiter-Interferometer (1) nach Anspruch 5, wobei der Unterschied bei der doppelten optischen Pfadlänge ausreicht, um einen Unterschied bei einer Phasenveränderung von $< 2\pi$ sicherzustellen, welche durch die Einführung von oder die Veränderungen bei dem interessierenden Stimulus verursacht wird.

7. Integriertes optisches Wellenleiter-Interferometer (1) nach einem der vorhergehenden Ansprüche, wobei die Abweichung in der optischen Pfadlänge des Interaktionspfades durch eine Abweichung in seiner geometrischen Länge bereitgestellt wird.

8. Integriertes optisches Wellenleiter-Interferometer (1) nach Anspruch 1 oder 7, wobei die geometrische Länge des Interaktionspfades gestuft ist.

9. Integriertes optisches Wellenleiter-Interferometer (1) nach Anspruch 1, 7 oder 8, wobei der Interaktionspfad eine doppelte geometrische Länge aufweist.

10. Integriertes optisches Wellenleiter-Interferometer (1) nach Anspruch 9, wobei der Unterschied bei der doppelten geometrischen Länge ausreicht, um einen Unterschied bei einer Phasenveränderung von $< 2\pi$ sicherzustellen, welche durch die Einführung von oder die Veränderungen bei dem interessierenden Stimulus verursacht wird.

11. Integriertes optisches Wellenleiter-Interferometer (1) nach Anspruch 1 oder 7, wobei die Abweichung in der geometrischen Länge des Interaktionspfades kontinuierlich ist.

12. Integriertes optisches Wellenleiter-Interferometer (1) nach Anspruch 11, wobei der Interaktionspfad einen Gradienten aufweist.

13. Integriertes optisches Wellenleiter-Interferometer (1) nach einem der Ansprüche 1 bis 6, wobei die Abweichung bei der optischen Pfadlänge des Interaktionspfades durch eine Abweichung bei seinem Brechungsindex bereitgestellt wird.

14. Integriertes optisches Wellenleiter-Interferometer (1) nach Anspruch 13, wobei sich der Brechungsindex intrinsisch verändert, indem sich die Zusammensetzung des Materials des erfassenden Wellenleiters (4e) verändert.

15. Integriertes optisches Wellenleiter-Interferometer (1) nach Anspruch 14, wobei der erfassende Wellenleiter (4e) aus zwei oder mehreren diskreten Abschnitten von Material verschiedener Zusammensetzungen zusammengesetzt ist.

16. Integriertes optisches Wellenleiter-Interferometer (1) nach Anspruch 14 oder 15, wobei der erfassende Wellenleiter (4e) eine duale Zusammensetzung aufweist.

17. Integriertes optisches Wellenleiter-Interferometer (1) nach Anspruch 13, wobei sich der Brechungsindex dimensional verändert.

18. Integriertes optisches Wellenleiter-Interferometer (1) nach Anspruch 17, wobei sich der Brechungsindex dimensional verändert, indem sich die Dicke des erfassenden Wellenleiters (4e) verändert.

**19.** Integriertes optisches Wellenleiter-Interferometer (1) nach Anspruch 17 oder 18, wobei der erfassende Wellenleiter (4e) eine doppelte Dicke aufweist.

**20.** Integriertes optisches Wellenleiter-Interferometer (1) nach einem der vorhergehenden Ansprüche, weiter eine bedeckende Schicht umfassend, welche derart ausgestaltet ist, dass sie die Abweichung bei der optischen Pfadlänge des Interaktionspfades definiert.

**21.** Integriertes optisches Wellenleiter-Interferometer (1) nach Anspruch 20, wobei die abdeckende Schicht ein Fenster (15) umfasst, welches die örtlich begrenzte Umgebung begrenzt.

**22.** Integriertes optisches Wellenleiter-Interferometer (1) nach Anspruch 21, wobei das Fenster (15) ein Medium begrenzt, so dass die abdeckende Schicht einen Interaktionspfad einer zumindest doppelten optischen Pfadlänge definiert, wobei ein erster Teil eines modalen Feldes mit dem Medium in dem Fenster zusammenwirkt und ein zweiter Teil des modalen Feldes mit dem Medium der abdeckende Schicht zusammenwirkt.


**Revendications**

**1.** Interféromètre optique à guide d'ondes intégré (1) capable de détecter la quantité d'un stimulus considéré ou des modifications dans celui-ci, comprenant :

un guide d'ondes de détection (4e) capable de présenter une réponse mesurable à une modification dans un environnement localisé causée par l'introduction du stimulus considéré ou des modifications dans celui-ci, ledit guide d'ondes de détection ayant une variation de longueur optique d'un chemin d'interaction, **caractérisé en ce que** ladite variation de longueur de chemin optique du chemin d'interaction est produite par une variation de sa longueur géométrique ou par une variation de son indice de réfraction et ladite variation étant suffisante pour assurer une variation de changement de phase causée par l'introduction du stimulus considéré ou des modifications dans celui-ci qui soit $<2\Pi$.

**2.** Interféromètre optique à guide d'ondes intégré (1) selon la revendication 1, comprenant en outre :

une ou plusieurs couches de détection (4f) capables d'induire dans le guide d'ondes de détection (4e) une réponse mesurable à une modification dans l'environnement localisé causée par l'introduction du stimulus considéré ou des modifications dans celui-ci.

**3.** Interféromètre optique à guide d'ondes intégré (1) selon la revendication 2, comprenant en outre :

un guide d'ondes inactif (4c) dans lequel la couche de détection (4f) est sensiblement incapable d'induire une réponse mesurable à une modification dans l'environnement localisé causée par l'introduction du stimulus considéré ou des modifications dans celui-ci.

**4.** Interféromètre optique à guide d'ondes intégré (1) selon l'une quelconque des revendications précédentes, dans lequel le chemin d'interaction est échelonné.

**5.** Interféromètre optique à guide d'ondes intégré (1) selon l'une quelconque des revendications précédentes, dans lequel le chemin d'interaction est de longueur de chemin optique double.

**6.** Interféromètre optique à guide d'ondes intégré (1) selon la revendication 5, dans lequel la différence de longueur de chemin optique double est suffisante pour assurer une différence de changement de phase causé par l'introduction du stimulus considéré ou des modifications dans celui-ci qui soit $<2\Pi$.

**7.** Interféromètre optique à guide d'ondes intégré (1) selon l'une quelconque des revendications précédentes, dans lequel la variation de longueur de chemin optique du chemin d'interaction est produite par une variation de sa longueur géométrique.

**8.** Interféromètre optique à guide d'ondes intégré (1) selon la revendication 1 ou 7, dans lequel la longueur géométrique du chemin d'interaction est échelonnée.

**9.** Interféromètre optique à guide d'ondes intégré (1) selon la revendication 1, 7 ou 8, dans lequel le chemin d'interaction est de longueur géométrique double.

**10.** Interféromètre optique à guide d'ondes intégré (1) selon la revendication 9, dans lequel la différence de longueur géométrique double est suffisante pour assurer une différence de changement de phase causé par l'introduction du stimulus considéré ou des modifications dans celui-ci qui soit <2Π.

**11.** Interféromètre optique à guide d'ondes intégré (1) selon la revendication 1 ou 7, dans lequel la variation de la longueur géométrique du chemin d'interaction est continue.

**12.** Interféromètre optique à guide d'ondes intégré (1) selon la revendication 11, dans lequel le chemin d'interaction a un gradient.

**13.** Interféromètre optique à guide d'ondes intégré (1) selon l'une quelconque des revendications 1 à 6, dans lequel la variation de longueur de chemin optique du chemin d'interaction est produite par une variation de son indice de réfraction.

**14.** Interféromètre optique à guide d'ondes intégré (1) selon la revendication 13, dans lequel on fait varier l'indice de réfraction de façon intrinsèque en faisant varier la composition du matériau du guide d'ondes de détection (4e).

**15.** Interféromètre optique à guide d'ondes intégré (1) selon la revendication 14, dans lequel le guide d'ondes de détection (4e) est composé de deux ou plusieurs parties discrètes de matériaux de composition différente.

**16.** Interféromètre optique à guide d'ondes intégré (1) selon la revendication 14 ou 15, dans lequel le guide d'ondes de détection (4e) est de composition double.

**17.** Interféromètre optique à guide d'ondes intégré (1) selon la revendication 13, dans lequel on fait varier l'indice de réfraction au plan dimensionnel.

**18.** Interféromètre optique à guide d'ondes intégré (1) selon la revendication 17, dans lequel on fait varier l'indice de réfraction au plan dimensionnel en faisant varier l'épaisseur du guide d'ondes de détection (4e).

**19.** Interféromètre optique à guide d'ondes intégré (1) selon la revendication 17 ou 18, dans lequel le guide d'ondes de détection (4e) est d'épaisseur double.

**20.** Interféromètre optique à guide d'ondes intégré (1) selon l'une quelconque des revendications précédentes, comprenant en outre une couche de recouvrement adaptée pour définir la variation de longueur de chemin optique du chemin d'interaction.

**21.** Interféromètre optique à guide d'ondes intégré (1) selon la revendication 20, dans lequel la couche de recouvrement intègre une fenêtre (15) qui délimite l'environnement localisé.

**22.** Interféromètre optique à guide d'ondes intégré (1) selon la revendication 21, dans lequel la fenêtre (15) délimite un milieu de telle façon que la couche de recouvrement définit un chemin d'interaction d'au moins une longueur de chemin optique double dans laquelle une première partie d'un champ modal interagit avec le milieu dans la fenêtre et une seconde partie du champ modal interagit avec le milieu de la couche de recouvrement.

FIG. 1

**FIG. 2**

FIG. 3

$\phi_1$                                    $\phi_r$

$\Delta L$

# FIG.    4

**FIG. 5**

FIG. 6

EP 1 483 547 B1

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0136947 A
- WO 9822807 A
- WO 0136945 A
- GB 0203581 A